# EUROPÄISCHE PATENTSCHRIFT

(11) **EP 3 300 594 B1**
(45) Veröffentlichungstag und Bekanntmachung des Hinweises auf die Patenterteilung: **23.09.2020**
(21) Anmeldenummer: 17186792.2
(22) Anmeldetag: 18.08.2017
(51) Int. Cl.: A01K 5/02, A01K 39/012

(54) **FÜTTERUNGSVORRICHTUNG FÜR GEFLÜGELTIERE**
FEEDING DEVICE FOR POULTRY
DISPOSITIF D'ALIMENTATION POUR VOLAILLE

(30) Priorität: 27.09.2016 DE 202016105370 U
(43) Veröffentlichungstag der Anmeldung: 04.04.2018
(73) Patentinhaber: Big Dutchman International GmbH, 49377 Vechta (DE)
(72) Erfinder: LANGFERMANN, Judith, 49429 Rechterfeld (DE)
(74) Vertreter: Eisenführ Speiser

(56) Entgegenhaltungen:
- CN-U- 204 888 345
- JP-U- S4 832 580
- US-A- 3 268 067
- US-A- 5 794 562

## Beschreibung

Die Erfindung betrifft eine Fütterungsvorrichtung für Geflügeltiere und ein Verfahren zur Fütterung von Geflügeltieren.

Fütterungsvorrichtungen für Geflügeltiere sind bekannt. Nachteilig an existierenden Fütterungsvorrichtungen ist, dass der Platz an der Fütterungsvorrichtung begrenzt und/oder nicht leicht zugänglich ist. Ein weiterer Nachteil ist, dass es immer wieder zu Verschmutzungen des Futters kommt.

US 3 268 067 A beschreibt einen verbesserten Schneckendosierer, wie er zur Verteilung des Futters auf langgestreckte Bunker für den gleichzeitigen Verzehr durch eine große Anzahl von Tieren verwendet wird. US 5 794 562 A beschreibt ein Geflügeltierfütterungssystem und -verfahren, bei dem eine Futterschalenanordnung mit einem Gitter mit Rippen, die Öffnungen zum Füttern von Geflügeltieren und dergleichen definieren, in eine weibliche Futterschalenanordnung umgewandelt wird, indem eine solche Schalenanordnung zum Füttern von männlichen Geflügeltieren und dergleichen vorgesehen wird und ein äußeres Gitter über das innere Gitter eingeführt wird. CN 204 888 345 U beschreibt eine Geflügeltierfüttervorrichtung mit Vorratsbehälter.

Es ist daher eine Aufgabe der vorliegenden Erfindung, eine Fütterungsvorrichtung für Geflügeltiere und ein Verfahren zur Fütterung von Geflügeltieren bereitzustellen, welche einen oder mehrere der genannten Nachteile reduzieren oder vermeiden. Insbesondere ist eine Aufgabe der vorliegenden Erfindung, eine Fütterungsvorrichtung für Geflügeltiere und ein Verfahren zur Fütterung von Geflügeltieren bereitzustellen, welche die Zugänglichkeit des Futters erleichtern und/oder eine verbesserte Fütterung ermöglichen und/oder Verschmutzungen des Futters reduzieren .

Diese Aufgabe wird gelöst durch eine Fütterungsvorrichtung nach Anspruch 1. Die Fütterungsvorrichtung für Geflügeltiere umfasst ein oberes Futterbereitstellungselement mit einer länglichen Erstreckung, mindestens eine Zugangsplattform, beispielsweise eine Sitzstange oder ein Gitterrost, die derart angeordnet und ausgebildet ist, dass Geflügeltiere von der Zugangsplattform aus an das

Futter im oberen Futterbereitstellungselement gelangen können, mindestens ein im Betriebszustand unterhalb des oberen Futterbereitstellungselements angeordnetes unteres Futterbereitstellungselement, wobei das untere Futterbereitstellungselement derart angeordnet und ausgebildet ist, dass im Betriebszustand Geflügeltiere von einem Boden aus an das Futter im unteren Futterbereitstellungselement gelangen können, und wobei das untere Futterbereitstellungselement derart angeordnet und ausgebildet ist, dass das untere Futterbereitstellungselement durch im oberen Futterbereitstellungselement bereitgestelltes Futter gespeist wird.

Die Fütterungsvorrichtung für Geflügeltiere umfasst ein oberes Futterbereitstellungselement mit einer länglichen Erstreckung, das im Betriebszustand im Wesentlichen horizontal ausgerichtet ist. Das obere Futterbereitstellungselement ist vorzugsweise nach oben geöffnet und so angeordnet und ausgebildet, dass Geflügeltiere das Futter aus dem oberen Futterbereitstellungselement aufnehmen können.

Erfindungsgemäß ist ferner eine Zugangsplattform vorgesehen, von der aus die Geflügeltiere an das Futter im oberen Futterbereitstellungselement gelangen können. Im Betriebszustand ist das obere Futterbereitstellungselement vorzugsweise von einem Boden, beispielsweise einem Stall- oder Volierenboden beabstandet. Dieser Abstand ist vorzugsweise derart bemessen, dass Geflügeltieren nicht vom Boden aus an das Futter im oberen Futterbereitstellungselement gelangen können, sondern sich hierzu zunächst auf die Zugangsplattform begeben müssen. Vorzugsweise ist auch die Zugangsplattform vom Boden beabstandet angeordnet. Die Zugangsplattform kann beispielsweise in Form einer Sitzstange oder eines Gitterrostes ausgebildet sein. Ferner ist bevorzugt, dass eine längliche Erstreckung der Zugangsplattform parallel zur länglichen Erstreckung des oberen Futterbereitstellungselements verläuft. Vorzugweise ist die Zugangsplattform oberhalb und/oder seitlich vom oberen Futterbereitstellungselement angeordnet.

Ferner ist im Betriebszustand unterhalb des oberen Futterbereitstellungselements ein unteres Futterbereitstellungselement angeordnet. Diese kann ebenfalls eine längliche Erstreckung aufweisen, kann aber auch in Richtung der länglichen Erstreckung des oberen Futterbereitstellungselements deutlich kürzer als dieses ausgebildet sein.

Das untere Futterbereitstellungselement ist vorzugsweise nach oben geöffnet und so angeordnet und ausgebildet, dass im Betriebszustand Geflügeltiere das Futter aus dem unteren Futterbereitstellungselement vom Boden aus aufnehmen können.

Die Bereitstellung von Futter im unteren Futterbereitstellungselement erfolgt durch eine Speisung des unteren Futterbereitstellungselements durch das obere Futterbereitstellungselement. Dies bedeutet insbesondere, dass im unteren Futterbereitstellungselement bereitgestelltes Futter zunächst dem oberen Futterbereitstellungselement zugeführt wurde und von dort in das untere Futterbereitstellungselement gelangt ist.

Die erfindungsgemäße Fütterungsvorrichtung hat mehrere Vorteile. Zum Einen ermöglicht es die erfindungsgemäße Fütterungsvorrichtung, dass eine bessere Zugänglichkeit des Futters gewährleistet wird. Insbesondere kann eine höhere Anzahl an Geflügeltieren gleichzeitig Futter aufnehmen, da über die Zugangsplattform auch dann weitere Geflügeltieren Zugang zum oberen Futterbereitstellungselement haben, wenn der Zugang zu den unteren Futterbereitstellungselement bereits durch auf dem Boden befindliche Geflügeltieren besetzt ist.

Ferner stellt die Anordnung des unteren Futterbereitstellungselements im Betriebszustand unterhalb des oberen Futterbereitstellungselements einen Schutz des im unteren Futterbereitstellungselement befindlichen Futters gegen Verschmutzungen dar, da das obere Futterbereitstellungselement das Eindringen von Schmutz in das untere Futterbereitstellungselement verhindert oder zumindest erschwert.

Zum Anderen ermöglicht die Speisung des unteren Futterbereitstellungselements durch das obere Futterbereitstellungselement eine Vergrößerung des Futterangebots an verschiedenen Futterbereitstellungselementen, ohne dass eine weitere oder separate Futterförderung oder Futterzuführung für das untere Futterbereitstellungselement bereitgestellt werden müsste.

Das obere Futterbereitstellungselement ist als Futtertrog ausgebildet. Das untere Futterbereitstellungselement ist als Futterschale ausgebildet. Eine Futterschale kann einen im Wesentlichen kreisförmigen oder ovalen Querschnitt in horizontaler Richtung haben. Die Futterschale kann beispielsweise teller- oder napfförmig ausgebildet sein.

Es ist in einer bevorzugten Ausführungsform ferner vorgesehen, dass das untere Futterbereitstellungselement im Betriebszustand in einer Höhe über einem Boden eines Tieraufenthaltsbereichs angeordnet ist, in der Geflügeltiere vom Boden aus an im unteren Futterbereitstellungselement bereitgestelltes Futter gelangen können.

Insbesondere ist es bevorzugt, dass sowohl das obere Futterbereitstellungselement als auch das untere Futterbereitstellungselement von einem Boden eines Tieraufenthaltsbereichs beabstandet sind. Vorzugsweise ist die Fütterungsvorrichtung in einem Tieraufenthaltsbereich von einer Decke oder einer Tragstruktur abgehängt. Auf diese Weise kann der Boden frei bleiben und beispielsweise mit Einstreu gefüllt sein.

Das untere Futterbereitstellungselement ist mit dem oberen Futterbereitstellungselement über eine Futterleitung verbunden. Diese Futterleitung dient vorzugsweise dem Speisen des unteren Futterbereitstellungselements. Die Futterleitung ist derart angeordnet und ausgebildet, dass sie das untere Futterbereitstellungselement trägt und am oberen Futterbereitstellungselement befestigt ist.

Es ist besonders bevorzugt, dass eine Speisung des unteren Futterbereitstellungselements durch das obere Futterbereitstellungselement im Wesentlichen schwerkraftgetrieben erfolgt. Ferner ist bevorzugt, dass eine Verbindung zur Speisung des unteren Futterbereitstellungselements durch das obere Futterbereitstellungselement freigegeben oder geschlossen werden kann, beispielsweise durch Bewegen eines Schließelements von einer geöffneten in eine geschlossene Stellung. Die Futterleitung ist als im Wesentlichen vertikal ausgerichtetes Fallrohr ausgebildet.

Insbesondere ist bevorzugt, dass ein Boden des oberen Futterbereitstellungselements im Bereich des unteren Futterbereitstellungselements eine Öffnung aufweist. Ferner vorzugsweise ist die Öffnung im Boden des oberen Futterbereitstellungselements mit der Futterleitung verbunden. Auf diese Weise kann eine, insbesondere schwerkraftgetriebene, Speisung des unteren Futterbereitstellungselements durch das obere Futterbereitstellungselement besonders einfach erfolgen.

Eine quer zur länglichen Erstreckung ausgerichtete im Betriebszustand im Wesentlichen horizontale Breite des oberen Futterbereitstellungselements ist maximal 50% größer oder kleiner als eine Breite des unteren Futterbereitstellungselements in der gleichen Richtung. Insbesondere ist bevorzugt, dass eine quer zur länglichen Erstreckung ausgerichtete im Betriebszustand im Wesentlichen horizontale Breite des oberen Futterbereitstellungselements maximal 40%, maximal 30% , maximal 20% oder maximal 10% größer oder kleiner ist als eine

Breite des unteren Futterbereitstellungselements in der gleichen Richtung. Die Begrenzung des Breitenunterschieds zwischen oberem Futterbereitstellungselement und unterem Futterbereitstellungselement kann sich insbesondere positiv auf den Schutz des Futters im unteren Futterbereitstellungselement vor Verschmutzungen auswirken.

In einer weiteren bevorzugten Fortbildungsform ist vorgesehen, dass das obere Futterbereitstellungselement eine Fördereinrichtung zum Fördern von Futter aufweist, insbesondere entlang der länglichen Erstreckung. Vorzugsweise ist die Fördereinrichtung als Förderkette oder Förderspirale ausgebildet.

Ferner ist bevorzugt, dass die Fütterungsvorrichtung zwei oder mehrere Zugangsplattformen, beispielsweise Sitzstangen oder Gitterroste, für Geflügeltiere umfasst. Vorzugsweise ist eine Zugangsplattform im Betriebszustand oberhalb des oberen Futterbereitstellungselements angeordnet. Vorzugsweise ist eine Zugangsplattform im Betriebszustand im Wesentlichen in Höhe des unteren Futterbereitstellungselements angeordnet. Insbesondere ist vorzugsweise jeweils eine Zugangsplattform auf den beiden länglichen Seiten des oberen Futterbereitstellungselements angeordnet. Ferner ist bevorzugt, dass eine längliche Erstreckung der zwei oder mehreren Zugangsplattformen parallel zur länglichen Erstreckung des oberen Futterbereitstellungselements verläuft.

In einer weiteren bevorzugten Ausführungsform umfasst die Fütterungsvorrichtung zwei oder mehrere im Betriebszustand unterhalb des oberen Futterbereitstellungselements angeordnete untere Futterbereitstellungselemente. Vorzugsweise sind alle oder einige dieser weiteren unteren Futterbereitstellungselemente wie hierin beschrieben ausgebildet. Insbesondere könnten alle unteren Futterbereitstellungselemente gleich ausgebildet sein. Es ist jedoch auch möglich, dass sich einzelne untere Futterbereitstellungselemente oder Gruppen von unteren Futterbereitstellungselementen von den übrigen unterscheiden.

Gemäß einem weiteren Aspekt wird die eingangs genannte Aufgabe gelöst durch ein Verfahren zur Fütterung von Geflügeltieren, umfassend: Bereitstellen einer hierin beschriebenen Fütterungsvorrichtung; Bereitstellen von Futter im oberen Futterbereitstellungselement; Speisen von Futter aus dem oberen Futterbereitstellungselement in das untere Futterbereitstellungselement.

Ferner beschrieben wird eine Verwendung einer zuvor beschriebenen Fütterungsvorrichtung zur Fütterung von Geflügeltieren.

Zu den Vorteilen, Ausführungsvarianten und Ausführungsdetails dieser weiteren Aspekte der Erfindung und ihrer möglichen Fortbildungen wird auf die vorangegangene Beschreibung zu den entsprechenden Merkmalen der Fütterungsvorrichtung verwiesen.

Bevorzugte Ausführungsformen der Erfindung werden beispielhaft anhand der beiliegenden Figuren beschrieben. Es zeigen:
- Fig. 1:: eine dreidimensionale Ansicht einer beispielhaften Ausführungsform einer erfindungsgemäßen Fütterungsvorrichtung für Geflügeltiere; und
- Fig. 2:: einen Querschnitt einer weiteren beispielhaften Ausführungsform einer erfindungsgemäßen Fütterungsvorrichtung für Geflügeltiere.

Gleiche oder im Wesentlichen funktionsgleiche Elemente sind in den Figuren mit den gleichen Bezugszeichen versehen.

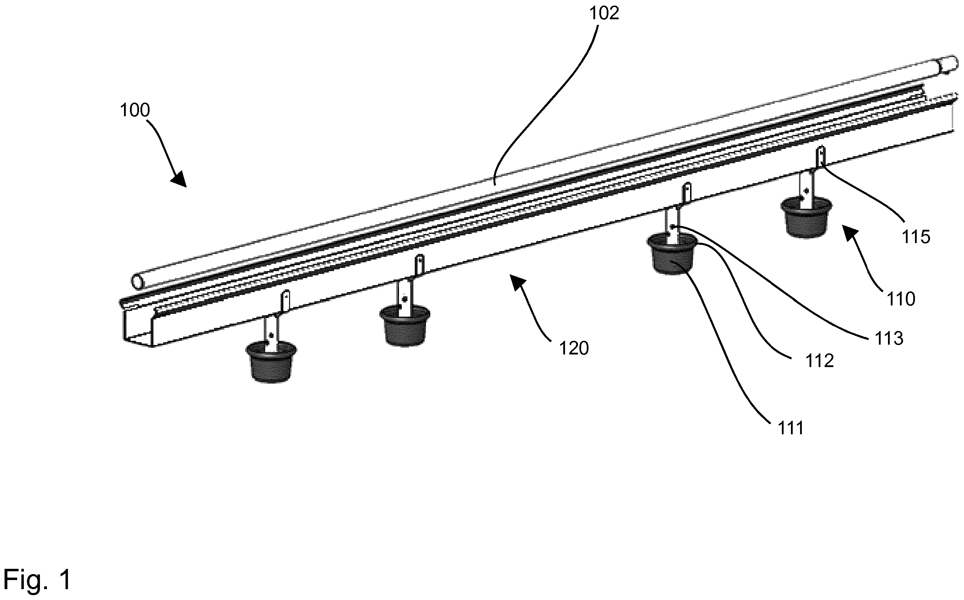

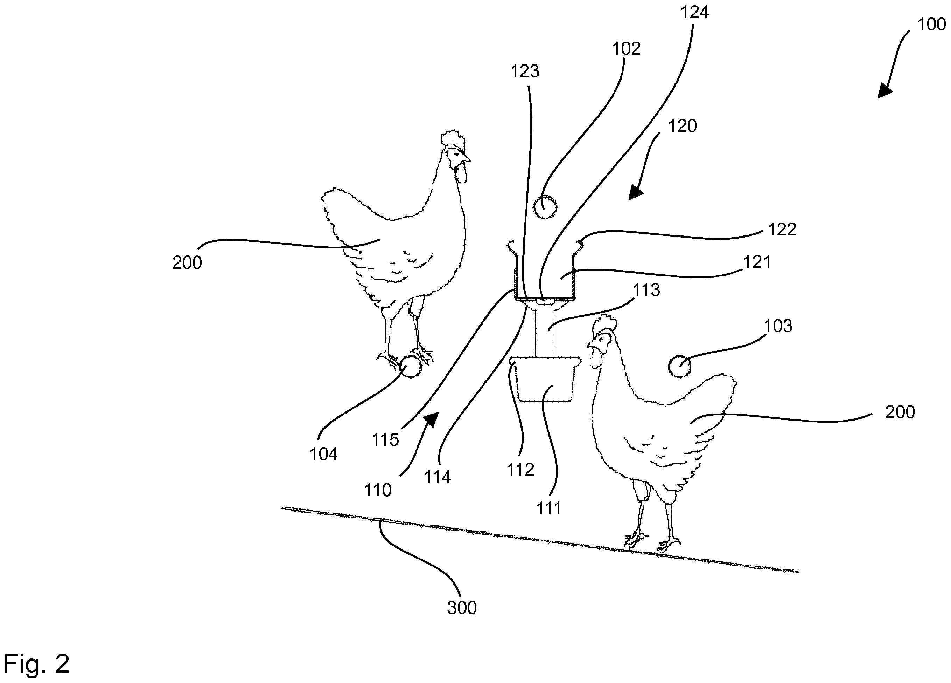

Die Figuren 1 und 2 zeigen eine Fütterungsvorrichtung 100 für Geflügeltiere 200 (nur in Figur 2 dargestellt) mit einem als Futtertrog 120 ausgebildeten, im Wesentlichen horizontal ausgerichteten oberen Futterbereitstellungselement mit einer länglichen Erstreckung im Betriebszustand. Unterhalb des Futtertrogs sind in Figur 1 vier untere Futterbereitstellungselemente zu erkennen (im Querschnitt in Figur 2 ist nur ein unteres Futterbereitstellungselement zu erkennen), die als Futterschalen 110 in Form von Näpfen 111 ausgebildet sind. In den Figuren ist nur ein Ausschnitt einer Fütterungsvorrichtung 100 dargestellt. Es können in einer Fütterungsvorrichtung 100 weniger oder deutlich mehr als vier Futterschalen 110 angeordnet sein. Ferner können auch andere Ausgestaltungen des oberen Futterbereitstellungselements und der unteren Futterbereitstellungselemente vorgesehen sein.

Sowohl der Futtertrog 120 als auch die Futterschalen 110 sind nach oben geöffnet und so angeordnet und ausgebildet, dass Geflügeltiere 200 das Futter daraus aufnehmen können. Der Futtertrog 200 weist einen oberen, leicht nach außen verbreiterten Rand 122 und einen Innenraum 121 auf, in dem das Futter bereitgestellt wird. Das Futter kann beispielsweise durch eine Futterspirale oder eine Futterkette (nicht dargestellt) im

Futtertrog 120 bereitgestellt werden. Die Futterschalen weisen oberen, leicht nach außen verbreiterten Rand 112 und einen Innenraum auf, in dem das Futter bereitgestellt wird. Die Futterleitungen 113 sind in einem oberen Bereich 114 verbreitert und über Befestigungselemente 115 am Futtertrog 120 befestigt. Die Futterschalen 110 wiederum sind an den Futterleitungen 113 befestigt, vorzugsweise derart, dass Futter aus den Futterleitungen 113 in die Futterschalen 110 gelangen kann. Auf diese Weise tragen die Futterleitungen 113 die Futterschalen 110 und hängen diese vom Futtertrog 120 ab.

Die Futterschalen 110 sind derart angeordnet und ausgebildet, dass sie durch im Futtertrog 120 bereitgestelltes Futter gespeist werden. Hierzu ist pro Futterschale 110 eine als im Wesentlichen vertikales Fallrohr ausgebildete Futterleitung 113 vorgesehen. Der Boden 123 des Futtertrogs 120 weist im Bereich der Futterleitungen 113 Öffnungen 124 auf, durch die im Futtertrog 120 bereitgestelltes Futter im Wesentlichen durch Schwerkrafteinwirkung in die Futterschalen 110 gelangen kann.

Wie insbesondere in Figur 2 zu erkennen ist, sind die Futterschalen 110 und der Futtertrog 120 im Betriebszustand vom Boden 300 des Tieraufenthaltsbereichs, der hier als Drahtbodenebene ausgebildet ist, beabstandet. Die Futterschalen 110 sind dabei in einer Höhe über einem Boden 300 angeordnet ist, in der Geflügeltiere 200 vom Boden 300 aus an in den Futterschalen 110 bereitgestelltes Futter gelangen können.

Eine quer zur länglichen Erstreckung ausgerichtete im Betriebszustand im Wesentlichen horizontale Breite des Futtertrogs 120 ist maximal 20% kleiner, vorzugsweise maximal 10% kleiner, als eine Breite der Futterschalen 110 in der gleichen Richtung.

Die Fütterungsvorrichtung 100 weist drei Zugangsplattformen in Form von Sitzstangen 102, 103, 104 für Geflügeltiere 200 auf. Eine Sitzstange 102 ist im Betriebszustand oberhalb des Futtertrogs 120 angeordnet und in beiden Figuren 1 und 2 gezeigt. Zwei weitere Sitzstangen 103, 104 (nur in Figur 2 gezeigt) sind Betriebszustand im Wesentlichen in Höhe der Futterschalen 110 angeordnet. Jeweils eine Sitzstange 103, 104 ist auf den beiden länglichen Seiten des Hauptfuttertrogs 120 angeordnet. Eine längliche Erstreckung der drei Sitzstangen 102, 103, 104 verläuft parallel zur länglichen Erstreckung des Futtertrogs 120.

Die Fütterungsvorrichtung 100 hat den Vorteil, dass eine größere Anzahl an Geflügeltieren 200 gleichzeitig an Futter gelangen kann. Während auf dem Boden 300 befindliche Geflügeltiere Futter aus den Futterschalen 110 aufnehmen können und den Zugang zu diesen Futterschalen 110 besetzen, können gleichzeitig weitere Geflügeltiere 200, die sich auf den Zugangsplattformen in Form von Sitzstangen befinden, an Futter aus dem Futtertrog 120 gelangen. Auf diese Weise wird insgesamt eine bessere Zugänglichkeit des Futters durch eine Vielzahl von Tieren gewährleistet. Die Fütterungsvorrichtung 100 hat ferner den Vorteil, dass unterhalb des Futtertrogs 120 weitere Fressplätze in Form der Futterschalen 110 bereitgestellt werden, die vom Futtertrog 120 gespeist werden. Hierdurch kann, insbesondere bei fehlendem oder knapp werdenden Fressplatzangebot in einer Tierhaltungsanlage, weiteres Futter schnell und einfach zur Verfügung gestellt werden. Die Anordnung der Futterschalen 110 unter dem Futtertrog 120 hat den Vorteil, dass das Futter auf der unteren Ebene nicht oder weniger durch darüber sitzende Geflügeltiere verschmutzt wird.

Ferner ermöglich diese Anordnung eine bessere Bewegung der Geflügeltiere. Auch wenn ein Geflügeltier von der Zugangsplattform aus am oberen Futterbereitstellungselement steht und frisst, bleiben die unteren Futterbereitstellungselemente weiterhin zugänglich. Gerade auch für Geflügeltiere, denen das Erreichen einer Zugangsplattform oder beispielsweise das Sitzen auf einer Sitzstange schwerfällt, sind die unteren Futterbereitstellungselemente eine sehr gute Option, da diese auch vom Boden aus zugänglich sind und das Erreichen einer Zugangsplattform oder das Sitzen auf einer Sitzstange daher nicht erforderlich ist. Es sind somit sowohl oberes Futterbereitstellungselement als auch untere Futterbereitstellungselement(e) permanent und zeitgleich für die Geflügeltiere zugänglich. Dadurch kann auf zwei Ebenen Futter angeboten werden, die Beschickung mit Futter jedoch über eine gemeinsame Fördereinrichtung realisiert sein.

## Patentansprüche

1. Fütterungsvorrichtung (100) für Geflügeltiere (200), umfassend
- ein oberes Futterbereitstellungselement mit einer länglichen Erstreckung,
- mindestens eine Zugangsplattform, beispielsweise eine Sitzstange (102, 103, 104) oder ein Gitterrost, die derart angeordnet und ausgebildet ist, dass Geflügeltiere von der Zugangsplattform aus an das Futter im oberen Futterbereitstellungselement gelangen können, und
- mindestens ein im Betriebszustand unterhalb des oberen Futterbereitstellungselements angeordnetes unteres Futterbereitstellungselement, ausgebildet als Futterschale (110),
- wobei das untere Futterbereitstellungselement derart angeordnet und ausgebildet ist, dass im Betriebszustand Geflügeltiere von einem Boden (300) aus an das Futter im unteren Futterbereitstellungselement gelangen können,
- wobei das untere Futterbereitstellungselement derart angeordnet und ausgebildet ist, dass das untere Futterbereitstellungselement durch im oberen Futterbereitstellungselement bereitgestelltes Futter gespeist wird,
- wobei das untere Futterbereitstellungselement mit dem oberen Futterbereitstellungselement über eine als im Wesentlichen vertikales Fallrohr ausgebildete Futterleitung (113) verbunden ist, und
- wobei die Futterleitung derart angeordnet und ausgebildet ist, dass sie das untere Futterbereitstellungselement trägt und am oberen Futterbereitstellungselement befestigt ist,
**dadurch gekennzeichnet, dass** das obere Futterbereitstellungselement als Futtertrog (120) ausgebildet ist, und dass eine quer zur länglichen Erstreckung ausgerichtete im Betriebszustand im Wesentlichen horizontale Breite des oberen Futterbereitstellungselements maximal 50% größer oder kleiner ist als eine Breite des unteren Futterbereitstellungselements in der gleichen Richtung.

2. Fütterungsvorrichtung nach dem vorhergehenden Anspruch,
**dadurch gekennzeichnet, dass** mindestens ein Abschnitt der Futterleitung als Hohlrohr ausgebildet ist.

3. Fütterungsvorrichtung nach mindestens einem der vorhergehenden Ansprüche,
**dadurch gekennzeichnet, dass** ein Boden des oberen Futterbereitstellungselements im Bereich des unteren Futterbereitstellungselements eine Öffnung aufweist.

4. Fütterungsvorrichtung nach mindestens einem der vorhergehenden Ansprüche,
**dadurch gekennzeichnet, dass** das obere Futterbereitstellungselement eine Fördereinrichtung zum Fördern von Futter aufweist, insbesondere entlang der länglichen Erstreckung.

5. Fütterungsvorrichtung nach dem vorhergehenden Anspruch,
**dadurch gekennzeichnet, dass** die Fördereinrichtung als Förderkette oder Förderspirale ausgebildet ist.

6. Fütterungsvorrichtung nach mindestens einem der vorhergehenden Ansprüche,
umfassend zwei oder mehrere Zugangsplattform, beispielsweise Sitzstangen, für Geflügeltiere.

7. Fütterungsvorrichtung nach mindestens einem der vorhergehenden Ansprüche,
umfassend zwei oder mehrere im Betriebszustand unterhalb des oberen Futterbereitstellungselements angeordnete untere Futterbereitstellungselemente.

8. Verfahren zur Fütterung von Geflügeltieren,
umfassend:
- Bereitstellen einer Fütterungsvorrichtung nach mindestens einem der vorhergehenden Ansprüche;
- Bereitstellen von Futter im oberen Futterbereitstellungselement;
- Speisen von Futter aus dem oberen Futterbereitstellungselement in das untere Futterbereitstellungselement.

## Claims

1. Feeding device (100) for poultry animals (200), comprising
- an upper feed provision element with an elongated expansion,
- at least one access platform, e.g. a perch (102, 103, 104) or grate, arranged and designed so that poultry animals can reach the feed in the upper feed provision element from the access platform, and
- at least one lower feed provision element designed as a feeding pan (110) arranged underneath the upper feed provision element during operation,
- wherein the lower feed provision element is arranged and designed so that during operation poultry animals can reach the feed in the lower feed provision element from a floor (300),
- wherein the lower fesed provision element is arranged and designed so that the lower feed provision element is supplied with feed provided in the upper feed provision element,
- wherein the lower feed provision element is connected to the upper feed provision element through a feed line (113) designed as an essentially vertical downpipe, and
- wherein the feed line is arranged and designed to support the lower feed provision element and is attached to the upper feed provision element,
- **characterized in that** the upper feed provision element is designed as a feeding trough, and that a transversal to the elongated extension during operation essentially horizontal width of the upper feed provision element is maximally 50% larger or smaller than a width of the lower feed provision element in the same direction.

2. Feeding device pursuant to the above claim,
**characterized in that** at least one section of the feeding line is designed as a hollow tube.

3. Feeding device pursuant to at least one of the previous claims,
**characterized in that** a bottom of the upper feed provision element in the area of the lower feed provision element features an opening.

4. Feeding device pursuant to at least one of the previous claims,
**characterized in that** the upper feed provision element features a conveyor system to transport feed, in particular along the elongated extension.

5. Feeding device pursuant to the previous claim,
**characterized in that** the conveyor system is designed as a conveyor chain or conveyor spiral.

6. Feeding device pursuant to at least one of the previous claims,
comprising two or multiple access platforms, for example perches, for poultry animals.

7. Feeding device pursuant to at least one of the previous claims,
comprising two or multiple lower feed provision elements during operation arranged underneath the upper feed provision element.

8. Process for feeding poultry animals,
comprising:
- the provision of a feeding device pursuant to at least one of the previous claims;
- the provision of feed in the upper feed provision element;
- the supply of feed from the upper feed provision element to the lower feed provision element.

## Revendications

1. Dispositif d'alimentation (100) pour volaille (200) comprenant
- un élément de fourniture d'aliment supérieur avec une étendue oblongue,
- au moins une plateforme d'accès, par exemple un perchoir (102, 103, 104) ou
un caillebottis qui est agencé et réalisé de telle manière que la volaille puisse parvenir depuis la plateforme d'accès à l'aliment dans l'élément de fourniture d'aliment supérieur, et
- au moins un élément de fourniture d'aliment inférieur agencé dans l'état de fonctionnement en dessous de l'élément de fourniture d'aliment supérieur, réalisé comme coque d'aliment (110),
- dans lequel l'élément de fourniture d'aliment inférieur est agencé et réalisé de telle manière que, dans l'état de fonctionnement, la volaille puisse parvenir depuis un sol (300) à l'aliment dans l'élément de fourniture d'aliment inférieur,
- dans lequel l'élément de fourniture d'aliment inférieur est agencé et réalisé de telle manière que l'élément de fourniture d'aliment inférieur soit alimenté par un aliment fourni dans l'élément de fourniture d'aliment supérieur,
- dans lequel l'élément de fourniture d'aliment inférieur est relié à l'élément de fourniture d'aliment supérieur par le biais d'une conduite d'aliment (113) réalisée comme tube de chute sensiblement vertical, et
- dans lequel la conduite d'aliment est agencée et réalisée de telle manière qu'elle porte l'élément de fourniture d'aliment inférieur et soit fixée à l'élément de fourniture d'aliment supérieur,
**caractérisé en ce que** l'élément de fourniture d'aliment supérieur est réalisé comme mangeoire (120), et qu'une largeur sensiblement horizontale dans l'état de fonctionnement orientée transversalement à l'étendue oblongue de l'élément de fourniture d'aliment supérieur est au maximum 50 % plus grande ou plus petite qu'une largeur de l'élément de fourniture d'aliment inférieur dans la même direction.

2. Dispositif d'alimentation selon la revendication précédente,
**caractérisé en ce qu'**au moins une section de la conduite d'aliment est réalisée comme tube creux.

3. Dispositif d'alimentation selon au moins une des revendications précédentes,
**caractérisé en ce qu'**un sol de l'élément de fourniture d'aliment supérieur présente une ouverture dans la zone de l'élément de fourniture d'aliment inférieur.

4. Dispositif d'alimentation selon au moins une des revendications précédentes,
**caractérisé en ce que** l'élément de fourniture d'aliment supérieur présente un dispositif de transport pour le transport d'aliment, en particulier le long de l'étendue oblongue.

5. Dispositif d'alimentation selon la revendication précédente,
**caractérisé en ce que** le dispositif de transport est réalisé comme chaîne transporteuse ou spirale transporteuse.

6. Dispositif d'alimentation selon au moins une des revendications précédentes,
comprenant deux ou plusieurs plateformes d'accès, par exemple perchoirs, pour volaille.

7. Dispositif d'alimentation selon au moins une des revendications précédentes,
comprenant deux ou plusieurs éléments de fourniture d'aliment inférieurs agencés dans l'état de fonctionnement en dessous de l'élément de fourniture d'aliment supérieur.

8. Procédé d'alimentation de volailles comprenant :
- la fourniture d'un dispositif d'alimentation selon au moins une des revendications précédentes ;
- la fourniture d'aliment dans l'élément de fourniture d'aliment supérieur ;
- l'alimentation d'aliment de l'élément de fourniture d'aliment supérieur dans l'élément de fourniture d'aliment inférieur.
